# EUROPÄISCHE PATENTSCHRIFT

(11) **EP 3 475 750 B1**
(45) Veröffentlichungstag und Bekanntmachung des Hinweises auf die Patenterteilung: **04.08.2021**
(21) Anmeldenummer: 17730519.0
(22) Anmeldetag: 21.06.2017
(51) Int. Cl.: G02B 21/06, G02B 21/16

(54) **BELEUCHTUNGSVORRICHTUNG FÜR EIN MIKROSKOP**
ILLUMINATION APPARATUS FOR A MICROSCOPE
DISPOSITIF D'ÉCLAIRAGE POUR UN MICROSCOPE

(30) Priorität: 23.06.2016 LU 93117
(43) Veröffentlichungstag der Anmeldung: 01.05.2019
(73) Patentinhaber: Leica Microsystems CMS GmbH, 35578 Wetzlar (DE)
(72) Erfinder: FAHRBACH, Florian, 68167 Mannheim (DE); FRIEDRICH, Lars, 69469 Weinheim (DE); KNEBEL, Werner, Kronau 76709 (DE)
(74) Vertreter: Schaumburg und Partner Patentanwälte mbB
(86) Internationale Anmeldenummer: PCT/EP2017/065319
(87) Internationale Veröffentlichungsnummer: WO 2017/220699

(56) Entgegenhaltungen:
- DE-A1- 4 416 558
- DE-A1- 10 257 423
- DE-A1-102007 015 063
- DE-A1-102010 060 121
- DE-A1-102012 010 207
- US-A1- 2011 215 258

## Beschreibung

Die Erfindung betrifft eine Beleuchtungsvorrichtung für ein Mikroskop zum Erzeugen einer Abregungs- oder Schaltlichtverteilung mit einer Lichtquelle, die ein Primärbeleuchtungslichtbündel erzeugt.

Die Erfindung betrifft außerdem ein Mikroskop mit einer solchen Beleuchtungsvorrichtung und ein Verfahren zum Abbilden, insbesondere zum überauflösenden Abbilden, einer Probe unter Verwendung eines Mikroskops einer solchen Beleuchtungsvorrichtung.

Die SPIM-Technik (Single Plane Illumination Microscopy), bei der eine schichtweise Beleuchtung der Probe senkrecht zur Detektionsachse erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einer von einem Beleuchtungslichtblatt (auch "Lichtstreifen" genannt) statt. Eine Schädigung der Probe durch Beleuchtungslicht in anderen Ebenen ist hierdurch vermieden.

Eine nach dem SPIM-Verfahren arbeitende optische Vorrichtung ist in DE 102 57 423 A1 beschrieben. Bei diesem Mikroskop wird eine Probe mit einem dünnen Lichtblatt beleuchtet, während die Beobachtung aus einer zu der Ebene des beleuchtenden Lichtblattes senkrechten Richtung erfolgt. Hierbei erfolgen die Beleuchtung und die Detektion über zwei separate optische Strahlengänge mit jeweils separater Optik. Das Lichtblatt wird von einer Zylinderlinse erzeugt. Für die Bildaufnahme wird die Probe durch das bezüglich des Detektors feststehende Lichtblatt bewegt, um schichtweise Fluoreszenz- und/oder Streulicht mit einem flächigen Detektor aufzunehmen. Die so gewonnenen Schichtbilddaten lassen sich anschließend zu einem aus einer dreidimensionalen Abbildung der Probe entsprechenden Datensatz zusammensetzen.

Aus DE 10 2007 015 063 A1 ist eine optische Anordnung mit einer Lichtquelle zum Abstrahlen eines Lichtbündels und mit optischen Elementen zur Umwandlung dieses Lichtbündels in die Form eines Lichtblattes bekannt. Die optische Anordnung ist insbesondere geeignet zur Beleuchtung einzelner Ebenen einer dreidimensionalen Probe bei der Selective Plane Illumination Microscopy (SPIM). Es sind Mittel zur Variation des Querschnittes des Lichtblattes, zur Variation der Länge des Lichtblattes und/oder zur Beeinflussung der Richtung, der innerhalb des Lichtblattes verlaufenden Strahlungsanteile vorhanden, um die Geometrie des Lichtblattes an die Beleuchtungserfordernisse bei der Beobachtung ein und derselben Probenebene mit mehreren verschiedenartigen Objektiven zu ermöglichen.

Eine Anordnung zur Steigerung des Auflösungsvermögens für Fluoreszenzanwendungen ist aus der DE 44 16 558 bekannt. Hierbei werden die lateralen Randbereiche des Fokusvolumens des Anregungslichtstrahls mit einem Lichtstrahl einer anderen Wellenlänge, dem sog. Stimulationslichtstrahl oder Abregungsstrahl, der von einem zweiten Laser emittiert wird, beleuchtet, um dort die vom Licht des ersten Lasers angeregten Probenbereiche durch stimulierte Emission in den Grundzustand zurück zu bringen. Detektiert wird dann nur das spontan emittierte Licht aus den nicht vom zweiten Laser beleuchteten Bereichen, so dass insgesamt eine Auflösungsverbesserung erreicht wird. Für dieses Verfahren hat sich die Bezeichnung STED (Stimulated Emission Depletion) eingebürgert.

Aus DE102010060121A1 ist ein SPIM-Mikroskop bekannt, welches mit einer y-Richtungs-Beleuchtungsquelle und einer z-Richtungs-Detektionslicht-Kamera versehen ist. Ein x-Scanner erzeugt durch Scannen des Beleuchtungs-Lichtstrahls in x-Richtung ein sequentielles Lightsheet (Lichtblatt). Mittels einer Beleuchtungsoptik mit einer im Strahlengang des Beleuchtungs-Lichtstrahls angeordneten Zoomoptik ist die Fokuslänge des Beleuchtungslichtstrahls variierbar. Gemäß einer Ausführungsform kann wahlweise ein STED-Abregungsstrahl (STED = Stimulated Emission Depletion) zugeschaltet werden, wozu eine Abregungslichtquelle vorgesehen ist, welche einen das sequentiell erzeugte Lightsheet in z-Richtung verdünnenden Abregungs-Lichtstrahl aus der y-Richtung auf das abzubildende Objekt sendet, wobei der Abregungs-Lichtstrahl in z-Richtung seitlich versetzt zum Beleuchtungs-Lichtstrahl auf das Objekt gesendet wird und parallel zu dem Beleuchtungs-Lichtstrahl in x-Richtung gescannt wird. Bevorzugt handelt sich um einen Abregungsstrahl, welcher in seinem Querschnitt so verändert wurde, dass dieser 2 Maxima aufweist, welche in z-Richtung gesehen vor und hinter dem Zentrum des Anregungsstrahls liegen und der Abregungsstrahl dort eine Nullstelle aufweist. Es ist jedoch auch möglich, zwei getrennte Laserstrahlen als Abregungsstrahlen auf beiden Seiten des Anregungsstrahls vorzusehen, oder das Lightsheet mit nur einem Abregungsstrahl auf nur einer Seite zu verdünnen, d. h. in z-Richtung gesehen nur entweder vor oder hinter dem Anregungsstrahl einen Abregungsstrahl anzuwenden.

Aus DE 10 2012 010 207 A1 ist ein Laser-Scanning-Mikroskop mit einer Beleuchtungsvorrichtung bekannt, die einen gepulsten Beleuchtungsstrahl abgibt. In dem Beleuchtungsstrahlengang vor dem Mikroskopobjektiv ist ein Polarisationsstrahlteiler vorgesehen, der zwei Teilstrahlengänge erzeugt, die unterschiedliche Lichtwege aufweisen. Mittels eines Vereinigungselementes werden die in den beiden Teilstrahlengängen propagierenden Teilstrahlen wiedervereinigt. In einen der beiden Teilstrahlengänge ist ein Phasenelement angeordnet, das mindestens zwei Bereiche mit unterschiedlicher Phasenbeeinflussung aufweist.

In US 2011/215258 A1 ist ein Verfahren zur kollimierten Mikroskopbildgebung beschrieben, bei dem in einem ersten Schritt ein Probenbereich zur Emission von Fluoreszenzstrahlung angeregt wird. In einem zweiten Schritt wird der vorgenannte Probenbereich durch eine entsprechende Beleuchtung in mehrere Teilbereiche separiert, wobei diese Separierung durch Zwischenbereiche erfolgt, in denen die Intensität der Fluoreszenzstrahlung reduziert ist oder die Fluoreszenzstrahlung andere Eigenschaften aufweist.

STED-ähnliche Ansätze, wie beispielsweise GSD (ground state depletion) oder RESOLFT (reversible saturable optical (fluorescence) transitions) zielen ebenfalls darauf ab, eine Bildgebung oder eine Strukturherstellung unterhalb der Beugungsgrenze mit sichtbarem Licht zu erreichen indem die Emission von Fluoreszenz im Randbereich des Anregungslichtsbündels durch Schalten bzw. Überführen der Fluorophore in dunklen Zustand unterdrückt wird.

Um mittels der STED/RESOLFT/GSD-Mikroskopie Überauflösung zu erreichen, wird üblicherweise ein symmetrischer, ringförmiger Strahl erzeugt mit dem Fluorophore durch stimulierte Emission (STED), ground state depletion / Überführung der Fluorophore in einen (dunklen) Tripplet-Zustand (GSD), oder durch molekulare Konformationsänderung/Schaltung (RESOLFT) daran gehindert werden, die mit einer zweiten Wellenlänge eingestrahlten Photonen zu absorbieren und/oder dann Fluoreszenz zu emittieren. Hierbei wird üblicher Weise ein zentral auf der optischen Achse befindliches Element verwendet, das den Abregungs- bzw. Schaltstrahl entsprechend so manipuliert, dass im Ergebnis ein symmetrischer, ringförmiger Strahl im Bereich der Probe entsteht.

Bisher wurde keine Methode vorgestellt, die einen Abregungs- bzw. Schaltstrahl so erzeugt, dass dieser für die besonderen Anforderungen in einem SPIM-Mikroskop optimiert sind. Diese wären einerseits die Abregung bzw. das Schalten nur auf zwei Seiten des Anregungsstrahls (also ausschließlich oberhalb und unterhalb des Lightsheets) vorzugsweise in Verbindung mit einer Beleuchtungsrichtung senkrecht zur Detektionsachse und eine große, insbesondere flexibel einstellbare Tiefenschärfe und davon unabhängig eine einstellbare Dicke und ein einstellbarer Abstand der beiden Abregungs/Schaltstrahlen, die an die Geometrie des (Anregungs-)Lichtblattes angepasst sind.

Es ist die Aufgabe der vorliegenden Erfindung, eine Beleuchtungsvorrichtung zum Erzeugen einer Abregungs- oder Schaltlichtverteilung anzugeben, die flexibel einstellbar und insbesondere an die besonderen Anforderungen eines SPIM-Mikroskops anpassbar ist.

Die Aufgabe wird gemäß Anspruch 1 durch eine Beleuchtungsvorrichtung der eingangs genannten Art gelöst.

Wie im Folgenden noch im Detail ausgeführt wird, hat die erfindungsgemäße Beleuchtungsvorrichtung den ganz besonderen Vorteil, dass die mit ihr erzeugte Abregungs- oder Schaltlichtverteilung im Bereich der Probe einfach und effizient an die jeweiligen spezifischen Anforderungen, insbesondere bei einem SPIM-Mikroskop, angepasst werden kann.

Ein wesentlicher Erfindungsgedanke ist hierbei, die Abregungs- oder Schaltlichtverteilung durch Interferenz zweier Teilbeleuchtungslichtbündel zu erzeugen, die getrennt voneinander durch die Eintrittspupille des Beleuchtungsobjektivs verlaufen und die sich nach dem Durchlaufen des Beleuchtungsobjektivs auf und/oder in der Probe räumlich überlagern. Der räumliche Abstand zwischen den Teilbeleuchtungslichtbündeln im Bereich der Eintrittspupille führt dazu, dass die Teilbeleuchtungslichtbündel nach dem Durchlaufen des Beleuchtungsobjektivs gegeneinander verkippt verlaufen und so in das Probenvolumen eindringen. Durch den relativen Phasenversatz der Teilbeleuchtungslichtbündel um π weist das im Bereich der Überlagerung entstehende Interferenzmuster entlang der optischen Achse eine Nullstelle auf. Es ist, was im Folgenden noch im Detail erläutert wird, insbesondere auch möglich, für ein Abregen oder Schalten von Farbstoffen in der SPIM-Mikroskopie die Abregungs- oder Schaltlichtverteilung so auszubilden, dass sie im Bereich der räumlichen Überlagerung der Teilbeleuchtungslichtbündel entlang einer Ebene, in der die optische Achse liegt, eine flächenartige Nullstelle aufweist.

Es ist zumeist so, dass lediglich das Fluoreszenzlicht detektiert werden soll, das aus dem Bereich stammt, in dem das Interferenzmuster bzw. die Abregungs- und/oder Schaltlichtverteilung eine Nullstelle aufweist, wobei im Sinne der vorliegenden Erfindung insbesondere auch dann eine Nullstelle vorliegt, wenn die Lichtintensität auf Grund technischer Imperfektionen nicht genau Null beträgt. Der Erfindung liegt insoweit insbesondere die Idee zu Grunde, die Zahl der abzuregenden Fluorophore zu minimieren (Intensitätsminimum). Im Folgenden wird deshalb gleichbedeutend anstatt von einer Nullstelle teilweise auch von einem Intensitätsminimum gesprochen.

Im Gegensatz zu bekannten Vorgehensweisen wird der Phasenversatz um π vorzugsweise nicht mittig auf ein einziges Beleuchtungslichtstrahlenbündel aufgeprägt. Vielmehr werden erfindungsgemäß aus einem Primärbeleuchtungslichtbündel zwei zunächst räumlich getrennte Teilbeleuchtungslichtbündel erzeugt, die in der Eintrittspupille des Beleuchtungsobjektivs zueinander einen Phasenversatz von π aufweisen, und die dann auf der Probe oder in dem Probenvolumen zur Interferenz gebracht.

Hierbei ist es beispielsweise möglich, dass das Phasenbeeinflussungsmittel und die Strahlteilungsvorrichtung durch dasselbe optische Bauteil gebildet sind, wobei darüber hinaus insbesondere vorgesehen sein kann, dass das optische Bauteil sowohl die Aufteilung des Primärbeleuchtungslichtbündels in die zwei Teilbeleuchtungslichtbündel, als auch den relativen Phasenversatz der Teilbeleuchtungslichtbündel zueinander bewirkt.

Alternativ ist es auch möglich, dass das Phasenbeeinflussungsmittel als ein von der Strahlteilungsvorrichtung separates Bauteil im Strahlengang eines der Teilbeleuchtungslichtbündel angeordnet ist. Beispielsweise braucht hierfür lediglich im Strahlengang eines der Teilbeleuchtungslichtbündel ein entsprechend geeignetes optisches Element angeordnet zu sein.

Bei einer besonderen Ausführung verläuft jedes der Teilbeleuchtungslichtbündel durch jeweils einen eigenen von zwei halbmondförmigen Teilen der Eintrittspupille. Hierbei kann insbesondere vorteilhaft vorgesehen sein, dass der halbmondförmige Teil mit dem jeweiligen Teilbeleuchtungslichtbündel unterleuchtet wird, was beispielsweise dadurch erreichbar ist, dass jedes Teilbeleuchtungslichtbündel im Bereich der Eintrittspupille einen Durchmesser aufweist, der kleiner ist, als der Radius der Eintrittspupille. Vorzugsweise wird die Eintrittspupille nicht voll ausgeleuchtet.

Der Phasenunterschied um π kann, was weiter unten noch im Detail erläutert ist, beispielsweise durch eine, insbesondere in der Eintrittspupille angeordnete, Phasenplatte mit zwei optisch unterschiedlich verzögernden Segmenten bewirkt werden, wobei eines der Teilbeleuchtungslichtbündel durch ein Segment und das andere der Teilbeleuchtungslichtbündel durch das andere Segment verläuft.

In besonders vorteilhafter Weise kann die Phasenplatte fest im Beleuchtungsobjektiv verbaut sein. Bei der Lichtblattmikroskopie ist diese bauliche Integration insbesondere dadurch möglich, dass - anders als bei der konfokalen Mikroskopie - das Beleuchtungsobjektiv typischerweise nicht auch zur Detektion verwendet wird. Die Phasenplatte hätte ansonsten einen nachteiligen Effekt auf die Bildqualität wenn sie in einem Objektiv verbaut wird, das zur Detektion verwendet wird.

Es ist beispielsweise auch möglich, was ebenfalls weiter unten noch im Detail erläutert ist, einen Phasenversatz der beiden Teilbeleuchtungslichtbündel um π dadurch zu erzeugen, dass die beiden Teilbeleuchtungslichtbündel relativ zueinander eine um eine ungerade Zahl, insbesondere um Eins, verschiedene Anzahl von Reflektionen an jeweils einer Metalloberfläche oder Totalreflektionen absolvieren. Hierbei wird ausgenutzt, dass Licht, das an einer Metallfläche reflektiert wird eine Phasenverschiebung um π erfährt.

Besonders einfach realisierbar ist eine Ausführung, bei der die Teilbeleuchtungslichtbündel im Bereich der Eintrittspupille parallel zueinander verlaufen und/oder bei der die Ausbreitungsrichtungen der Teilbeleuchtungslichtbündel im Bereich der Eintrittspupille parallel zueinander ausgerichtet sind.

Allerdings ist es auch möglich, dass die Teilbeleuchtungslichtbündel im Bereich der Eintrittspupille nicht parallel zueinander verlaufen. Verlaufen die Teilbeleuchtungslichtbündel in der Pupille nicht parallel zur optischen Achse dann interferieren sie auch nicht in der Fokusebene des Beleuchtungsobjektivs (in der Fourierebene), sondern davor oder dahinter. Insoweit kann durch ein Verkippen der Teilbeleuchtungslichtbündel vorteilhaft eine axiale Verschiebung des Fokus erreicht werden.

Es ist vorteilhaft auch möglich, dass die Teilbeleuchtungslichtbündel nicht symmetrisch gegenüber der optischen Achse und/oder zueinander verkippt in das Beleuchtungsobjektiv eingekoppelt werden. Auf diese Weise kann ein unsymmetrisches Interferenzmuster erreicht werden, was für bestimmte Untersuchungssituationen wünschenswert sein kann.

Bei einer ganz besonders vorteilhaften Ausführung der erfindungsgemäßen Beleuchtungsvorrichtung ist wenigstens ein Einstellmittel vorhanden, mit dem die Position der Teilbeleuchtungslichtbündel im Bereich der Eintrittspupille und/oder die Position wenigstens eines der Teilbeleuchtungspupille relativ zur optischen Achse des Beleuchtungslichtobjektivs und/oder die Form der Teilbeleuchtungslichtbündel im Bereich der Eintrittspupille und/oder die Divergenz der Teilbeleuchtungslichtbündel im Bereich der Eintrittspupille und/oder der Abstand der Teilbeleuchtungslichtbündel im Bereich der Eintrittspupille und/oder der Durchmesser der Teilbeleuchtungslichtbündel im Bereich der Eintrittspupille einstellbar ist.

Im Bereich der Probe bilden die beiden Teilstrahlen ein streifenförmiges Interferenzmuster. Der Abstand und die Abmessungen der Teilstrahlen in der Pupille kann insbesondere fest gewählt werden oder frei einstellbar sein.

In einem besonderen Fall werden der Durchmesser und der Abstand der Teilbeleuchtungslichtbündel so aufeinander abgestimmt, dass das Interferenzmuster der beiden Teilstrahlen nur aus zwei symmetrisch um eine Nullstelle liegenden Intensitätsmaxima besteht.

Beispielsweise kann der Strahldurchmesser erhöht werden um die Breite des Interferenzmusters zu erhöhen. Es steigt die Zahl der Intensitätsmaxima und Nullstellen, wobei die in den Maxima erreichte Intensität symmetrisch zum Rand hin abnimmt.

Beispielsweise kann durch das Einstellen des Abstandes der beiden Teilbeleuchtungslichtbündel im Bereich der Pupille der Abstand der benachbarten Maxima bzw. die Periode des Interferenz-Musters der beiden Teilstrahlen eingestellt werden.

Durch die Wahl der Position der beiden Teilestrahlenbündel relativ zur Mitte der Eintrittspupille kann die Abregungs- oder Schaltlichtverteilung relativ zur optischen Achse des Beleuchtungsobjektivs verkippt werden.

Darüber hinaus ist es beispielsweise möglich, durch ein Einstellen des Strahldurchmessers wenigstens eines der Teilbeleuchtungslichtbündel die Schärfentiefe der Abregungs- oder Schaltlichtverteilung einzustellen.

Bei einer vorteilhaften Ausführung weist das Einstellmittel, insbesondere zum Einstellen des Abstandes und/oder der Positionen der Teilbeleuchtungslichtbündel, wenigstens ein hinsichtlich des bewirkenden Ablenkwinkels einstellbares, strahlablenkendes Element auf. Hierbei kann es sich beispielsweise um einen kippbar gelagerten Spiegel handeln. Von besonderem Vorteil ist eine Ausführung, bei der das strahlablenkende Element wenigstens einen ferngesteuerten, motorisch bewegbaren Spiegel aufweist. Alternativ oder zusätzlich ist es auch möglich, dass das Einstellmittel, insbesondere zum Einstellen des Abstandes und/oder der Positionen der Teilbeleuchtungslichtbündel, wenigstens ein kippbar gelagertes und/oder ferngesteuertes motorisch bewegbares Gitter aufweist. Insbesondere kann das Einstellmittel dazu ausgebildet sein, einen Strahlversatz, insbesondere einen Parallelversatz, zu bewirken. Zu diesem Zweck kann das Einstellmittel beispielsweise eine im Strahlengang eines der Teilbeleuchtungslichtbündel eine drehbar gelagerte, planparallele Platte oder zwei hintereinander geschaltete kippbare Spiegel aufweisen.

Bei einer besonderen Ausführung weist das Einstellmittel, insbesondere zum Einstellen des Abstandes und/oder der Positionen der Teilbeleuchtungslichtbündel, wenigstens ein aktives optisches Element auf. Hierbei kann es sich beispielsweise um ein SLM (spatial light modulator) oder um ein DMD (digital micromirror device) handeln.

Bei einer ganz besonders vorteilhaften Ausführung, die ein schnelles und flexibles Einstellen erlaubt, weist das Einstellmittel, insbesondere zum Einstellen des Abstandes und/oder der Position der Teilbeleuchtungslichtbündel, wenigstens ein akustooptisches Bauteil auf. Beispielsweise kann das akustooptische Bauteil als AOD (acoustooptical deflector) oder als AOM (acoustooptical modulator) ausgebildet sein. Insbesondere kann das Einstellmittel auch einen AOTF (acoustooptical tunable filter) aufweisen, der derart gesteuert ist, dass durch eine Polarisationsänderung der ersten Beugungsordnung gegenüber der nullten Beugungsordnung eine folgende polarisationsabhängige Phasenverzögerung mittels eines doppelbrechenden Materials erfolgt.

Alternativ oder zusätzlich ist es auch möglich, dass das Einstellmittel, insbesondere zum Einstellen des Abstandes und/oder der Position der Teilbeleuchtungslichtbündel, zwei hinsichtlich ihres Abstandes und/oder hinsichtlich ihrer Position einstellbare Blenden aufweist, die in der Eintrittspupille des Beleuchtungsobjektivs oder in einer zur Eintrittspupille konjugierten Ebene angeordnet sind. Hierbei kann vorteilhaft in der Weise vorgegangen werden, dass die Blenden mit den Teilbeleuchtungslichtbündeln überleuchtet werden, so dass lediglich der durch die Blenden tretende Teil der Teilbeleuchtungslichtbündel zum Beleuchtungsobjektiv gelangt. Mit einem Verschieben einer der Blenden verschiebt sich somit auch der jeweils zum Beleuchtungsobjektiv gelangende Teil des jeweiligen Teilbeleuchtungslichtbündels. Insbesondere können die Blenden zusätzlich auch hinsichtlich ihres Öffnungsdurchmessers einstellbar ausgebildet sein. Beispielsweise kann es sich um Irisblenden handeln. Mit derartigen Blenden können vorteilhaft auch die lateralen Abmessungen der Teilbeleuchtungslichtbündel eingestellt werden. Die Blenden, insbesondere Irisblenden, können auch in das Beleuchtungsobjektiv integriert sein.

Bei einer besonderen Ausführung weist das Einstellmittel, insbesondere zum Einstellen der lateralen Abmessungen, insbesondere des Durchmessers, der Teilbeleuchtungslichtbündel, einen hinsichtlich der Vergrößerung, insbesondere ferngesteuert, einstellbaren Strahlaufweiter im Strahlengang wenigstens eines der Teilbeleuchtungslichtbündel auf. Alternativ oder zusätzlich kann auch vorgesehen sei, dass Einstellmittel, insbesondere zum Einstellen der lateralen Abmessungen der Teilbeleuchtungslichtbündel, wenigstens eine Linse mit variabler Brennweite aufweist.

Bei einer besonderen Ausführung sind die Teilbeleuchtungslichtbündel im Bereich der Eintrittspupille kollimiert. Es ist jedoch auch möglich, dass die Teilbeleuchtungslichtbündel im Bereich der Eintrittspupille konvergent oder divergent verlaufen. Von besonderem Vorteil ist eine Ausführung der Beleuchtungsvorrichtung, bei der die Konvergenz beziehungsweise Divergenz der Teilbeleuchtungslichtbündel mittels eines Einstellmittels einstellbar ist. Durch ein Einstellen der Konvergenz beziehungsweise Divergenz der Teilbeleuchtungslichtbündel kann die Lage der Strahltaille der Abregungs- oder Schaltlichtverteilung relativ zur Brennebene des Beleuchtungsobjektivs verschoben werden.

Die Teilbeleuchtungslichtbündel können, insbesondere in der Eintrittspupille, als Gaußsche-Lichtbündel ausgebildet sein. Allerdings ist dies nicht zwingend notwendig. Beispielsweise können die Teilbeleuchtungslichtbündel alternativ auch als Flat-Top-Beams ausgebildet sein.

Eine besonders robuste und einfach zu realisierende Vorgehensweise zur Erzeugung der beiden Teilbeleuchtungslichtbündel besteht darin, ein binäres Gitter in einer zur Fokusebene des Beleuchtungsobjektivs konjugierten Ebene anzuordnen. Das binäre Gitter kann man sich als Überlagerung von zwei geblazten Gittern (Blazegittern) vorstellen, deren Phase gegenläufig und um π gegeneinander verschoben ist. Derartige binäre Gitter können einfach als statische, diffraktive Elemente hergestellt werden, wobei ein für die gewünschte Anwendung geeigneter Abstand der Teilbeleuchtungslichtbündel erzeugt werden kann, indem die Periode des Gitters entsprechend gewählt und/oder eingestellt wird. Ein solches Gitter in einer Ausgestaltung als Modulator (z.B. LCoS-SLM oder ferroelektrischer SLM) stellt eine besonders flexible Lösung zur Einstellung des Abstands der Teilbeleuchtungslichtbündel in der Pupille dar. Darüber hinaus kann der Modular bei geeigneter technischer Ausführung auch dazu in der Lage sein, die Amplitude der Teilbeleuchtungslichtbündel zu verändern. Durch einen Modulator könnte also die Schärfentiefe der Abregungs- oder Schaltlichtverteilung flexibel eingestellt werden.

Ganz allgemein kann vorteilhaft vorgesehen sein, dass die Strahlteilungsvorrichtung wenigstens ein Gitter aufweist und/oder dass die Strahlteilungsvorrichtung wenigstens ein Phasengitter aufweist. Insbesondere kann vorteilhaft auch vorgesehen sein, dass die Strahlteilungsvorrichtung ein binäres Gitter aufweist und/oder dass die Strahlteilungsvorrichtung ein Überlagerungsgitter aufweist, das der Überlagerung von zwei hinsichtlich ihrer Phasenverzögerungsverteilung gegenläufig orientierten Gittern entspricht. Von besonderem Vorteil ist eine Ausführung, bei der die Strahlteilungsvorrichtung ein hinsichtlich der Gitterperiode einstellbares Gitter aufweist.

Insbesondere für SPIM-Anwendungen können die Teilbeleuchtungslichtbündel im Bereich der Probe und/oder Bereich der Eintrittspupille im Querschnitt elliptisch und/oder als Lichtblatt ausgebildet sein. Dies kann zum Beispiel durch die Verwendung anamorphotischer Optiken im Strahlengang erreicht werden. Beispielsweise kann ein Laserstrahl mit einer Zylinderlinse auf das Gitter abgebildet werden.

Von ganz besonderem Vorteil ist ein Mikroskop, das eine erfindungsgemäße Beleuchtungsvorrichtung aufweist. Ein solches Mikroskop kann eine weitere Lichtquelle (2) aufweisen, die ein Anregungslichtbündel zum Beleuchten der Probe erzeugt. Das Anregungslichtbündel dient dazu, in der Probe eine Fluoreszenzanregung zu bewirken. Alternativ zu einer weiteren Lichtquelle (2) kann auch vorgesehen sein, dass die Lichtquelle (2), die bereits das Licht für die Abregungs- oder Schaltlichtverteilung bereitstellt, zusätzlich auch das Anregungslicht erzeugt. Insbesondere kann die Lichtquelle (2) hierfür als Mehrwellenlängenlichtquelle, insbesondere als Weißlichtquelle, ausgebildet sein.

Das Anregungslichtbündel kann insbesondere als Anregungslichtblatt ausgebildet sein. Zum Erzeugen einer Überauflösung kann vorteilhaft vorgesehen sein, dass die Abregungs- oder Schaltlichtverteilung zwei zum Anregungslichtblatt als parallele Abregungs- oder Schaltlicht- Lichtblätter aufweist, die beidseitig des Anregungslichtblattes angeordnet sind. Wie bereits erwähnt kann der Abstand dieser beiden Abregungs- oder Schaltlicht- Lichtblätter durch Einstellen des Abstandes der Teilbeleuchtungslichtbündel eingestellt werden wobei die Schärfentiefe der des Abregungslichtblatts durch geeignete Änderung der Durchmesser der Teilbeleuchtungslichtbündel in der Pupille kompensiert werden kann.

Zum Erzeugen einer überaufgelösten Abbildung einer Probe wird mit dem, insbesondere als Anregungslichtblatt ausgebildeten, Anregungslichtbündel eine Fluoreszenzanregung der Probe bewirkt, während mit der Abregungs- oder Schaltlichtverteilung eine stimulierte Emission und/oder ein ground state depletion oder eine Konformitätsänderung oder ein Schalten von Fluorphoren (im Randbereich des Anregungslichtblatts) bewirkt wird.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine schematische Darstellung eines Ausführungsbeispiels einer erfindungsgemäßen Beleuchtungsvorrichtung,
- Fig. 2: ein Ausführungsbeispiel betreffend die Erzeugung einer Abregungs- oder Schaltlichtverteilung für linienscannende Systeme (DSLM),
- Fig. 3: ein Ausführungsbeispiel bezüglich der Erzeugung einer Abregungs- oder Schaltlichtverteilung für eine statische Beleuchtung (SPIM),
- Fig. 4: eine vorteilhafte Intensitätsverteilung von Anregungslicht und Abregungs- oder Schaltlicht,
- Fig. 5: eine suboptimale Intensitätsverteilung von Anregungslicht und Abregungs- oder Schaltlicht,
- Fig. 6: eine schematische Darstellung eines möglichen Aufbaus zur Erzeugung von zwei Teilbeleuchtungslichtbündel mit dem Phasenunterschied π,
- Fig. 7: eine Illustration zur Erläuterung der Funktionsweise des in Fig. 6 gezeigten Phasengitters, und
- Fig. 8: die Intensitätsverteilungen in unterschiedlichen Querschnittsebenen bezüglich des in Fig. 6 dargestellten Ausführungsbeispiels.

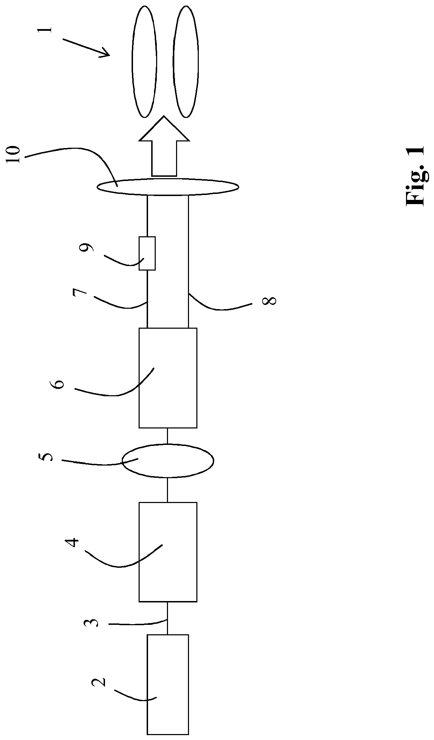

Figur 1 zeigt eine schematische Darstellung eines Ausführungsbeispiels einer erfindungsgemäßen Beleuchtungsvorrichtung für ein Mikroskop zum Erzeugen einer Abregungs- oder Schaltlichtverteilung 1. Die Beleuchtungsvorrichtung beinhaltet eine Lichtquelle 2, die beispielsweise als Laser ausgebildet sein kann und die ein Primärbeleuchtungslichtbündel 3 erzeugt. Der Lichtquelle 2 ist ein variabler Strahlaufweiter 4 und eine Zylinderoptik 5 nachgeordnet. Die Zylinderoptik 5 formt das Primärbeleuchtungslichtbündel 3 lichtblattartig.

Der Zylinderoptik 5 ist eine Strahlteilungsvorrichtung 6 nachgeordnet, die das Primärbeleuchtungslichtbündel 3 in ein erstes Teilbeleuchtungslichtbündel 7 und ein zweites Teilbeleuchtungslichtbündel 8 räumlich aufteilt. Im Strahlengang des ersten Teilbeleuchtungslichtbündels 7 ist ein Phasenbeeinflussungsmittel 9 angeordnet, das die Phase des ersten Teilbeleuchtungslichtbündels 7 derart beeinflusst, dass die beiden Teilbeleuchtungslichtbündel 7, 8 im Bereich ihrer späteren räumlichen Überlagerung einen Phasenversatz von π aufweisen. Die Beleuchtungsvorrichtung weist ein Beleuchtungsobjektiv 10 auf, das die Teilbeleuchtungslichtbündel 7, 8 auf und/oder in eine (in Figur 1 nicht dargestellte) Probe fokussiert, wobei die Teilbeleuchtungslichtbündel 7, 8 räumlich getrennt voneinander durch die Eintrittspupille des Beleuchtungsobjektivs 10 verlaufen und sich nach dem Durchlaufen des Beleuchtungsobjektivs 10 auf und/oder in der Probe räumlich überlagern, so dass die gewünschte Abregungs- oder Schaltlichtverteilung 1 durch Interferenz entsteht.

Die schematisch dargestellte Beleuchtungsvorrichtung eignet sich insbesondere zur Anwendung in einem SPIM-Mikroskop. Es ist natürlich auch möglich eine Abregungs- oder Schaltlichtverteilung für ein linienscannendes System (DSLM) zu erzeugen. Hierbei kann insbesondere auf eine Zylinderoptik 5 verzichtet werden.

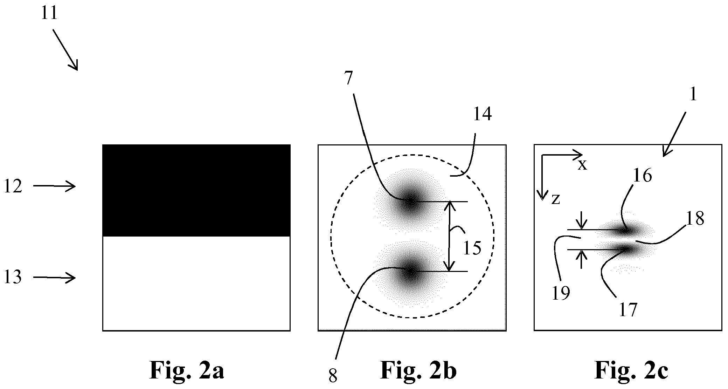

Figur 2 zeigt ein Ausführungsbeispiel betreffend die Erzeugung einer Abregungs- oder Schaltlichtverteilung 1 für ein linienscannendes System, wobei in Figur 2a schematisch die in der Eintrittspupille des Beleuchtungsobjektivs angeordnete Phasenplatte 11 dargestellt ist. Die Phasenplatte 11 weist zwei Segmente 12, 13 auf, wobei die Segmente 12, 13 relativ zueinander unterschiedlich ausgebildet sind, nämlich so, dass Licht, das durch das erste Segment 12 verläuft relativ zu Licht, das durch das Segment 13 verläuft einen Phasenunterschied von π aufweist. Insoweit kann dem ersten Segment 12 die Phase 0 und dem zweiten Segment 13 die Phase π zugeordnet sein.

Figur 2b zeigt eine Aufsicht auf die Ebene der Eintrittspupille des Beleuchtungsobjektivs 10 und illustriert die Intensitätsverteilung der Teilbeleuchtungslichtbündel 7, 8 am Ort der Eintrittspupille des Beleuchtungsobjektivs 10. Während das erste Teilbeleuchtungslichtbündel 7 durch das erste Segment 12 der Phasenplatte 11 verläuft, verläuft das zweite Teilbeleuchtungslichtbündel 8 durch das zweite Segment 13 der Phasenplatte 11. Es ist deutlich zu erkennen, dass jedes Teilbeleuchtungslichtbündel 7, 8 im Bereich der Eintrittspupille einen Durchmesser aufweist, der kleiner ist, als der Radius der Eintrittspupille 14. Die Teilbeleuchtungslichtbündel 7, 8 weisen in z-Richtung einen Relativabstand 15 zueinander auf.

Figur 2c zeigt die Intensitätsverteilung der durch Interferenz der beiden Teilbeleuchtungslichtbündel 7, 8 nach Durchlaufen des Beleuchtungsobjektivs entstehenden Abregungs- oder Schaltlichtverteilung (senkrecht zur Ausbreitungsrichtung entlang der y-Achse). Es ist zu erkennen, dass die Abregungs- oder Schaltlichtverteilung 1 zwei Intensitätsmaxima 16, 17 aufweist zwischen denen sich ein Intensitätsminimum 18 befindet. Der Abstand 19 der Intensitätsmaxima 16, 17 lässt sich durch Verändern des Abstandes der Teilbeleuchtungslichtbündel 7, 8 am Ort der Eintrittspupille 14 einstellen. Durch das Einstellen der Durchmesser der Teilbeleuchtungslichtbündel 7, 8 im Bereich der Eintrittspupille 14 kann die Breite der an das zentrale Intensitätsminimum 18 angrenzenden Intensitätsmaxima 16, 17 der Abregungs- oder Schaltlichtverteilung eingestellt werden.

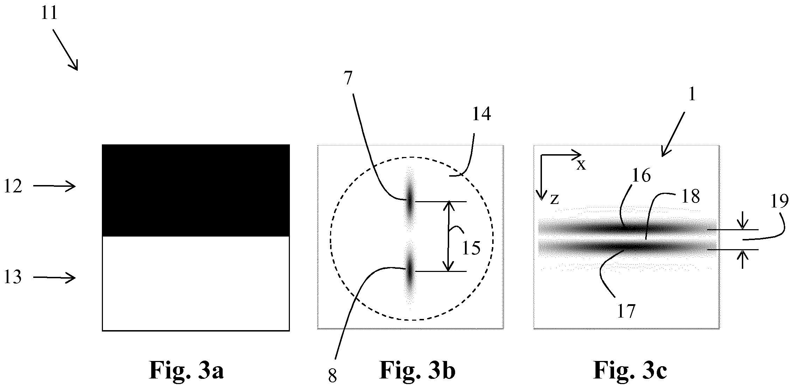

Die Figuren 3a bis 3c illustrieren beispielhaft die Erzeugung einer Abregungs- oder Schaltlichtverteilung 1 für eine statische Beleuchtung, insbesondere in der SPIM-Mikroskopie. Hierzu wird genauso wie in Bezug auf das Ausführungsbeispiel gemäß den Figuren 2a bis 2c in der Eintrittspupille des Beleuchtungsobjektivs 10 eine Phasenplatte 11 verwendet, die zwei Segmente 12, 13 aufweist und einen Phasenunterschied der Teilbeleuchtungslichtbündel 7, 8 um π bewirkt. Durch die Verwendung einer Zylinderoptik können in der Eintrittspupille 14 lichtblattartige Teilbeleuchtungslichtbündel 7, 8 erzeugt werden. Alternativ ist es auch möglich, im Querschnitt kreisrunde Teilbeleuchtungslichtbündel mittels wenigstens einer hinsichtlich des Ablenkwinkels einstellbaren Strahlablenkeinrichtung so schnell hin und her zu wedeln, dass sie de facto nicht von einem mit einer Zylinderoptik erzeugten Lichtblatt zu unterscheiden sind.

Figur 3c zeigt die Intensitätsverteilung der Abregungs- oder Schaltlichtverteilung 1, die durch Interferenz der Teilbeleuchtungslichtbündel 7, 8 nach Durchlaufen des Beleuchtungsobjektivs in der Probe entsteht. Die Abregungs- oder Schaltlichtverteilung weist zwei Intensitätsmaxima 16, 17, auf, die lichtblattartig (parallel zur X-Y-Ebene) ausgebildet sind. Zwischen den beiden Intensitätsmaxima 16, 17 befindet sich ein flächenartiges Intensitätsminimum 18. Insbesondere kann vorteilhaft vorgesehen sein, dass eine Probe mit einem Anregungslichtblatt zum Bewirken einer Fluoreszenzanregung beleuchtet wird, das im Bereich des Intensitätsminimums 18 der Abregungs- oder Schaltlichtverteilung 1 angeordnet ist und das zu beiden Seiten von den parallel angeordneten Intensitätsmaxima 16, 17 der Abregungs- oder Schaltlichtverteilung 1 überlagert wird, um die Emission von Fluoreszenzlicht entlang z einzuschränken und insbesondere um Überauflösung, also eine über die klassische Begrenzung der Lichtmikroskopie hinaus gehende Auflösung, entlang z zu erreichen. Auch hier gilt, dass durch Einstellen des Abstandes 15 der Teilbeleuchtungslichtbündel 7, 8 der Abstand 19 der Intensitätsmaxima eingestellt werden kann.

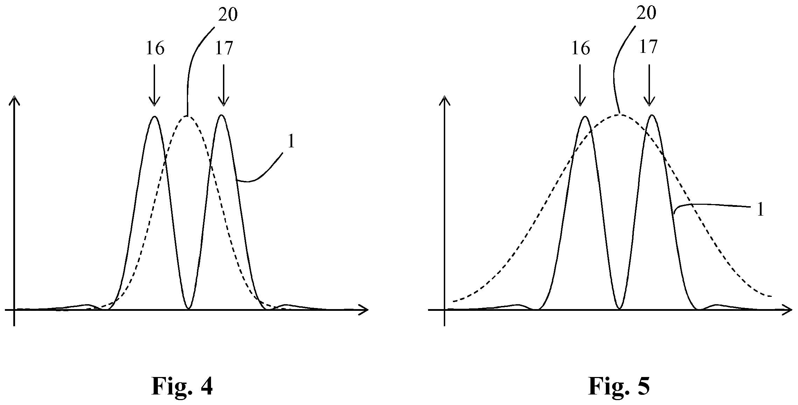

Figur 4 zeigt exemplarisch eine vorteilhafte Kombination von Anregungslichtverteilung 20 und von Abregungs- oder Schaltlichtverteilung 1. Aufgetragen ist die Intensität in Abhängigkeit vom Ort. Es ist zu erkennen, dass die Breite der Abregungs- oder Schaltlichtverteilung 1 die gesamte Breite der Anregungslichtverteilung 20 überdeckt.

Im Gegensatz hierzu zeigt Figur 5 eine suboptimale Anpassung der Verteilung von Anregungslicht 20 einerseits und von Abregungs- oder Schaltlicht 1. Es ist zu erkennen, dass die Breite der zu schmalen Abregungs- oder Schaltlichtverteilung 1 nicht die gesamte Breite der Anregungslichtverteilung 20 überdeckt, so dass von den Bereichen lateral außerhalb der beiden Intensitätsmaxima der Abregungs- oder Schaltlichtverteilung 1 nachteiligerweise durch das Anregungslicht hervorgerufene Fluoreszenzstrahlung zu erwarten ist, was das Ziel des Erreichens einer Überauflösung negativ beeinflusst.

Durch Einstellen des Abstandes der Teilbeleuchtungslichtbündel 7, 8 in der Eintrittspupille 14 des Beleuchtungsobjektivs 10 lässt sich der Abstand der Maxima 16, 17 der Abregungs- oder Schaltlichtverteilung 1 und die Steilheit der Flanken der Abregungs- oder Schaltlichtverteilung 1 einstellen. Ein ganz besonderer Vorteil hiervon liegt darin, dass sich die Tiefenschärfe unabhängig vom Abstand der Maxima 16, 17 einstellen lässt.

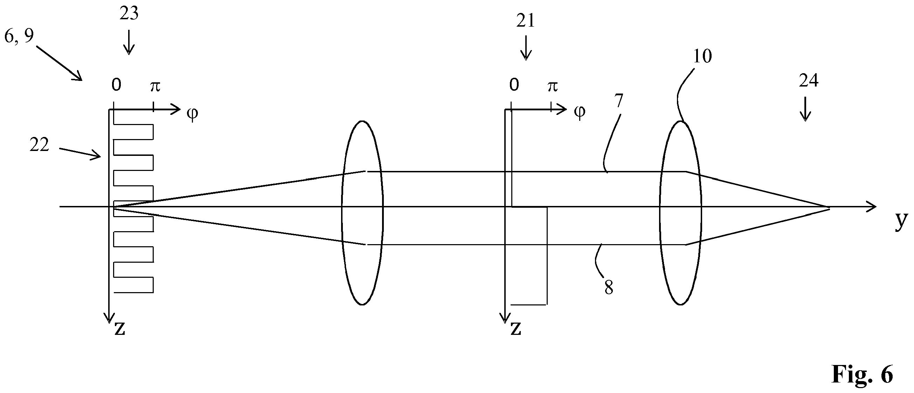

Figur 6 zeigt eine ganz schematische Darstellung eines möglichen Aufbaus zur Erzeugung von zwei Teilbeleuchtungslichtbündeln 7, 8, die relativ zueinander einen Phasenunterschied von π aufweisen.

Bei diesem Aufbau sind das Phasenbeeinflussungsmittel 9 und die Strahlteilungsvorrichtung 6 durch dasselbe optische Bauteil, nämlich durch ein Rechteck-Phasengitter 22 gebildet, wobei das Rechteck-Phasengitter 22 sowohl die Aufteilung des (in dieser Figur nicht dargestellten) Primärbeleuchtungslichtbündels 3 in die zwei Teilbeleuchtungslichtbündel 7, 8 als auch den relativen Phasenversatz der Teilbeleuchtungslichtbündel 7, 8 zueinander bewirkt. Das Rechteck-Phasengitter 22 ist in einer ersten Ebene 23 angeordnet.

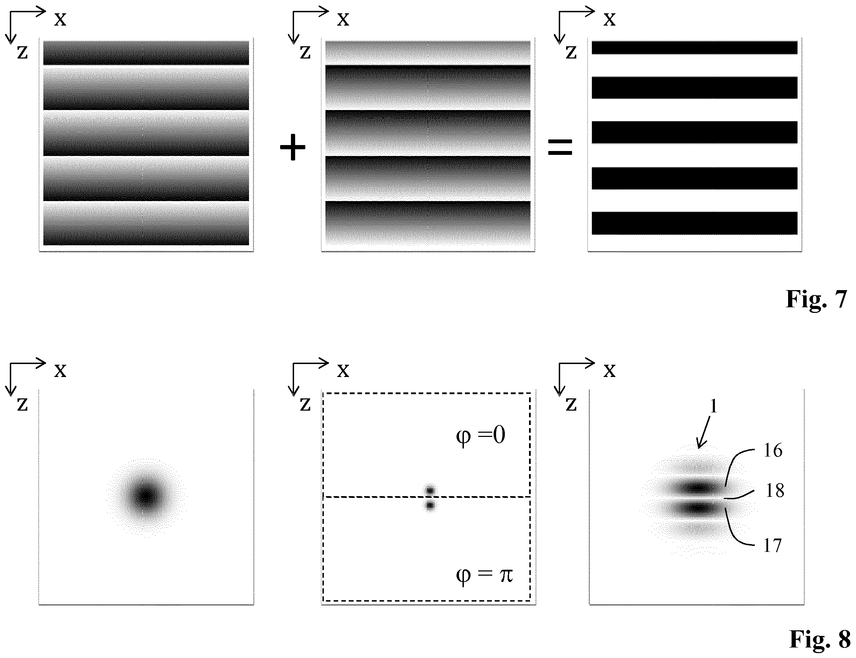

Das Rechteck-Phasengitter 22 kann als binäres Gitter ausgebildet sein. Das binäre Gitter kann man sich als Überlagerung von zwei geblazten Gittern vorstellen, deren Phase gegenläufig verläuft und um π gegeneinander verschoben ist, was in Figur 7 dargestellt ist. Die erste Ebene 23 ist eine zur Fokusebene 24 des Beleuchtungsobjektivs 10 korrespondierende Ebene, während die Ebene 21 der Eintrittspupille des Beleuchtungsobjektivs 10 zu der ersten Ebene 23 und zu der Fokusebene 24 eine Fourierebene ist.

Anschaulich kann man sich die Funktionsweise des Rechteck-Phasengitters 22 wie folgt verdeutlichen: Stellt man sich in einem ersten Gedankenschritt statt des Rechteck-Phasengitters 22 ein Prisma vor, so wird deutlich, dass ein solches Prisma das einfallende Primärbeleuchtungslichtbündel von der optischen Achse weglenken würde. In einem nächsten Gedankenschritt kann man das Prisma durch ein Fresnel-Prisma, das aus einer Vielzahl von gleichgroßen kürzeren Prismen besteht, ersetzen. Im Ergebnis ergibt sich derselbe Effekt der Ablenkung des Primärbeleuchtungslichtbündels von der optischen Achse weg. Ein um 180° gedreht angeordnetes Fresnel-Prisma würde das einfallende Primärbeleuchtungslichtbündel in die entgegengesetzte Richtung von der optischen Achse weglenken.

Die Fresnel-Prismen können durch Phasengitter ersetzt werden, die hinsichtlich der von ihr erzeugten Phasenverzögerung so dargestellt werden wie in Figur 7, wobei unterschiedliche Graustufen eine unterschiedliche Phasenverzögerung darstellen (schwarz = Phasenverzögerung π, weiß = Phasenverzögerung 0). Die Addition dieser Phasenverteilungen ergibt das in Figur 7 rechts dargestellte Rechteck-Phasengitter 22, das in Ebene 23 angeordnet ist.

Anstelle des Rechteck-Phasengitters 22 könnte auch ein akustooptisches Gitter, das beispielsweise mit einem AOD erzeugt werden kann, verwendet werden.

In Figur 8 ist ganz links die Intensitätsverteilung des Primärbeleuchtungslichtbündels in der ersten Ebene 23 dargestellt, während die mittlere Darstellung der Figur 8 die Intensitätsverteilung der reltiv zueinander um π phasenverschobenen Teilbeleuchtungslichtbündel 7, 8 illustriert.

In der Figur 8 ist ganz rechts die Abregungs- oder Schaltlichtverteilung 1 in der Fokusebene 24 dargestellt. Es ist zu erkennen, dass die erzeugte Abregungs- oder Schaltlichtverteilung 1 zwei Intensitätsmaxima 16, 17 aufweist, zwischen denen ein Intensitätsminimum 18 angeordnet ist.

### Bezugszeichenliste:

- 1: Abregungs- oder Schaltlichtverteilung
- 2: Lichtquelle
- 3: Primärbeleuchtungslichtbündel
- 4: Variabler Strahlaufweiter
- 5: Zylinderoptik
- 6: Strahteilungsvorrichtung
- 7: Erstes Teilbeleuchtungslichtbündel
- 8: Zweites Teilbeleuchtungslichtbündel
- 9: Phasenbeeinflussungsmittel
- 10: Beleuchtungsobjektiv
- 11: Phasenplatte
- 12: Erstes Segment
- 13: Zweites Segment
- 14: Eintrittspupille
- 15: Abstand der Teilbeleuchtungslichtbündel 7, 8
- 16: Intensitätsmaximum
- 17: Intensitätsmaximum
- 18: Intensitätisminimum
- 19: Abstand der Intensitätsmaxima 16, 17
- 20: Intensitätsverteilung des Anregungslichts
- 21: Ebene der Eintrittspupille des Beleuchtungsobjektivs 10
- 22: Rechteck-Phasengitter
- 23: Erste Ebene
- 24: Fokusebene

## Patentansprüche

1. Beleuchtungsvorrichtung für ein Mikroskop zum Erzeugen einer Abregungs- oder Schaltlichtverteilung (1), wobei die Beleuchtungsvorrichtung eine Lichtquelle (2) hat, die ausgebildet ist, ein Primörbeleuchtungslichtbündel (3) zu erzeugen, wobei die Beleuchtungsvorrichtung umfasst:
a. eine Strahlteilungsvorrichtung (6), die ausgebildet ist, das Primärbeleuchtungslichtbündel (3) in zwei Teilbeleuchtungslichtbündel (7, 8) aufzuteilen,
b. ein Beleuchtungsobjektiv (10), das ausgebildet ist, die Teilbeleuchtungslichtbündel (7, 8) auf und/oder in eine Probe zu fokussieren, wobei die Teilbeleuchtungslichtbündel (7, 8) räumlich getrennt voneinander durch eine Eintrittspupille des Beleuchtungsobjektivs (10) verlaufen und sich nach dem Durchlaufen des Beleuchtungsobjektivs (10) auf und/oder in der Probe räumlich überlagern, und
c. wenigstens ein Phasenbeeinflussungsmittel (9), das ausgebildet ist, einen relativen Phasenversatz der Teilbeleuchtungslichtbündel (7, 8) zueinander zu bewirken derart, dass die Teilbeleuchtungslichtbündel (7, 8) in der Eintrittspupille des Beleuchtungsobjektivs einen Phasenversatz von π aufweisen.

2. Beleuchtungsvorrichtung nach Anspruch 1, **dadurch gekennzeichnet, dass**
a. die Beleuchtungsvorrichtung derart ausgebildet ist, dass jedes Teilbeleuchtungslichtbündel (7, 8) durch jeweils einen eigenen von zwei halbmondförmigen Teilen der Eintrittspupille (14) verläuft, und/oder dass
b. die Beleuchtungsvorrichtung derart ausgebildet ist, dass jedes Teilbeleuchtungslichtbündel (7, 8) durch jeweils einen halbmondförmigen Teil der Eintrittspupille (14) verläuft, wobei jeweils der halbmondförmige Teil von dem Teilbeleuchtungslichtbündel (7, 8) unterleuchtet wird, und/oder dass
c. die Beleuchtungsvorrichtung derart ausgebildet ist, dass jedes Teilbeleuchtungslichtbündel (7, 8) im Bereich der Eintrittspupille (14) einen Durchmesser aufweist, der kleiner ist, als der Radius der Eintrittspupille (14), und/oder dass
d. die Beleuchtungsvorrichtung derart ausgebildet ist, dass die Teilbeleuchtungslichtbündel (7, 8) die Eintrittspupille (14) nicht voll ausleuchten.

3. Beleuchtungsvorrichtung nach Anspruch 1 oder 2, **dadurch gekennzeichnet, dass** wenigstens ein Einstellmittel vorhanden ist, mit dem
a. die Position der Teilbeleuchtungslichtbündel (7, 8) im Bereich der Eintrittspupille (14), und/oder
b. die Position wenigstens eines der Teilbeleuchtungslichtbündel (7, 8) relativ zur optischen Achse des Beleuchtungsobjektivs (10), und/oder
c. die Form der Teilbeleuchtungslichtbündel (7, 8) im Bereich der Eintrittspupille (14), und/oder
d. die Divergenz der Teilbeleuchtungslichtbündel (7, 8) im Bereich der Eintrittspupille (14), und/oder
e. der Abstand der Teilbeleuchtungslichtbündel (7, 8) im Bereich der Eintrittspupille (14), und/oder
f. der Durchmesser der Teilbeleuchtungslichtbündel (7, 8) im Bereich der Eintrittspupille (14), einstellbar ist.

4. Beleuchtungsvorrichtung nach Anspruch 3, **dadurch gekennzeichnet, dass**
a. das Einstellmittel, insbesondere zum Einstellen des Abstandes (15) und/oder der Positionen der Teilbeleuchtungslichtbündel (7, 8), wenigstens ein hinsichtlich des Ablenkwinkels einstellbares, strahlablenkendes Element aufweist, und/oder dass
b. das Einstellmittel, insbesondere zum Einstellen des Abstandes (15) und/oder der Positionen der Teilbeleuchtungslichtbündel (7, 8), wenigstens einen kippbar gelagerten und/oder ferngesteuert, motorisch bewegbaren Spiegel aufweist, und/oder dass
c. das Einstellmittel, insbesondere zum Einstellen des Abstandes (15) und/oder der Positionen der Teilbeleuchtungslichtbündel (7, 8), wenigstens ein kippbar gelagertes und/oder ferngesteuert, motorisch bewegbares Gitter aufweist, und/oder dass
d. das Einstellmittel, insbesondere zum Einsteilen des Abstandes (15) und/oder der Positionen der Teilbeleuchtungslichtbündel (7, 8), wenigstens ein aktives optisches Element aufweist, und/oder dass
e. das Einstellmittel, insbesondere zum Einstellen des Abstandes (15) und/oder der Positionen der Teilbeleuchtungslichtbündel (7, 8), wenigstens ein aktives optisches Element aufweist, das als SLM (spatial light modulator) oder als DMD (digital micromirror device) ausgebildet ist, und/oder dass
f. das Einstellmittel, insbesondere zum Einstellen des Abstandes (15) und/oder der Positionen der Teilbeleuchtungslichtbündel (7, 8), wenigstens akustoptisches Bauteil aufweist, und/oder dass
g. das Einstellmittel, insbesondere zum Einstellen des Abstandes (15) und/oder der Positionen der Teilbeleuchtungslichtbündel (7, 8), wenigstens akustooptisches Bauteil aufweist, das als AOD (acoustooptical deflector) ausgebildet ist, und/oder dass
h. das Einstellmittel, insbesondere zum Einstellen des Abstandes (15) und/oder der Positionen der Teilbeleuchtungslichtbündel (7, 8), wenigstens akustooptisches Bauteil aufweist, das als AOM (acoustooptical modulator) ausgebildet ist, und/oder dass
i. das Einstellmittel, insbesondere zum Einstellen des Abstandes (15) und/oder der Positionen der Teilbeleuchtungslichtbündel (7, 8), einen AOTF (acoustooptical tunable filter) aufweist, der derart gesteuert ist, dass durch eine Polarisationsänderung der ersten Beugungsordnung gegenüber der nullten Beugungsordnung eine folgende polarisationsabhängige Phasenverzögerung mittels eines doppelbrechenden Materials erfolgt, und/oder dass
j. das Einstellmittel, insbesondere zum Einstellen des Abstandes (15) und/oder der Positionen der Teilbeleuchtungslichtbündel (7, 8), zwei hinsichtlich ihres Abstandes und/oder hinsichtlich ihrer Position einstellbare Blenden, insbesondere im Durchmesser einstellbare Irisblenden, aufweist, die in der Eintrittspupille (14) des Beleuchtungsobjektivs (10) oder in einer zur Eintrittspupille (14) konjugierten Ebene angeordnet sind, und/oder dass
k. das Einstellmittel, insbesondere zum Einstellen des Durchmessers der Teilbeleuchtungslichtbündel (7, 8), einen hinsichtlich der Vergrößerung, insbesondere ferngesteuert, einstellbaren Strahlaufweiter im Strahlengang wenigstens eines der Teilbeleuchtungslichtbündel (7, 8) aufweist, und/oder dass
l. das Einstellmittel, insbesondere zum Einstellen des Durchmessers der Teilbeleuchtungslichtbündel (7, 8), wenigstens eine Linse mit variabler Brennweite im Strahlengang wenigstens eines der Teilbeleuchtungslichtbündel (7,8) aufweist.

5. Beleuchtungsvorrichtung nach einem der Ansprüche 1 bis 4, **dadurch gekennzeichnet, dass** der Durchmesser und der Abstand der Teilbeleuchtungslichtbündel so aufeinander abgestimmt sind, dass das Interferenzmuster der beiden Teilstrahlen nur aus zwei symmetrisch um eine Nullstelle liegenden Intensitätsmaxima besteht.

6. Beleuchtungsvorrichtung nach einem der Ansprüche 1 bis 5, **dadurch gekennzeichnet, dass**
a. die Abregungs- oder Schaltlichtverteilung (1) der im Bereich ihrer räumlichen Überlagerung interferierenden Teilbeleuchtungslichtbündel (7, 8) entlang der optischen Achse eine Nullstelle aufweist,
b. die Abregungs- oder Schaltlichtverteilung (1) der im Bereich ihrer räumlichen Überlagerung interferierenden Teilbeleuchtungslichtbündel (7, 8) entlang einer Ebene, in der die optische Achse liegt, eine Nullstelle aufweist.

7. Beleuchtungsvorrichtung nach einem der Ansprüche 1 bis 6, **dadurch gekennzeichnet, dass**
a. das Phasenbeeinflussungsmittel (9) und die Strahlteilungsvorrichtung (6) durch dasselbe optische Bauteil gebildet sind und/oder dass
b. das Phasenbeeinflussungsmittel (9) und die Strahlteilungsvorrichtung (6) durch dasselbe optische Bauteil gebildet sind, wobei das optische Bauteil sowohl die Aufteilung des Primärbeleuchtungslichtbündels (3) in die zwei Teilbeleuchtungslichtbündel (7, 8), als auch den relativen Phasenversatz der Teilbeleuchtungslichtbündel (7, 8) zueinander bewirkt.

8. Beleuchtungsvorrichtung nach einem der Ansprüche 1 bis 7, **dadurch gekennzeichnet, dass** Strahlteilungsvorrichtung (6) wenigstens ein Gitter aufweist und/oder dass die Strahlteilungsvorrichtung (6) wenigstens ein Phasengitter aufweist und/oder dass die Strahlteilungsvorrichtung (6) ein binäres Gitter aufweist und/oder dass die Strahlteilungsvorrichtung (6) ein Überlagerungsgitter aufweist, das der Überlagerung von zwei hinsichtlich ihrer Phasenverzögerungsverteilung gegenläufig orientierten und/oder geblazten Gittern entspricht und/oder dass die Strahlteilungsvorrichtung (6) ein hinsichtlich der Gitterperiode einstellbares Gitter aufweist.

9. Mikroskop mit einer Beleuchtungsvorrichtung nach einem der Ansprüche 1 bis 8.

10. Mikroskop nach Anspruch 9, **dadurch gekennzeichnet, dass** die Lichtquelle (2) oder eine weitere Lichtquelle (2) wenigstens ein Anregungslichtbündel zum Beleuchten der Probe erzeugt.

11. Mikroskop nach Anspruch 10, **dadurch gekennzeichnet, dass** das Anregungslichtbündel im Bereich der Probe mit der Abregungs- oder Schaltlichtverteilung (1) räumlich und/oder zeitlich überlagert ist.

12. Mikroskop nach Anspruch 10 oder 11, **dadurch gekennzeichnet, dass**
a. das Mikroskop als SPIM-Mikroskop ausgebildet ist, und/oder dass
b. das Anregungslichtbündel als Anregungslichtblatt ausgebildet ist und dass die Abregungs- oder Schaltlichtverteilung (1) zwei zum Anregungslichtblatt jeweils parallele Abregungs- oder Schaltlicht-Lichtblötter aufweist, die beidseitig des Anregungslichtblattes angeordnet sind.

13. Verfahren zum Abbilden, insbesondere zum überauflösenden Abbilden, einer Probe unter Verwendung eines Mikroskops nach einem der Ansprüche 11 bis 12, **dadurch gekennzeichnet, dass** mit dem Anregungslichtbündel eine Fluoreszenzanregung der Probe bewirkt wird, während mit der Abregungs- oder Schaltlichtverteilung (1) eine stimulierte Emission und/oder ein ground state depletion und/oder ein Konformitätsänderung und/oder ein Schalten von Fluorophoren bewirkt wird.

14. Verfahren nach Anspruch 13, **dadurch gekennzeichnet, dass** die Ausrichtung und/oder die Position der Abregungs- oder Schaltlichtverteilung (1) relativ zur Probe und/oder relativ zur optischen Achse des Beleuchtungsobjektivs (10) durch Einstellen der Position der Teilbeleuchtungslichtbündel (7, 8) relativ zueinander und/oder relativ zur Eintrittspupille (14) eingestellt wird.

15. Verfahren nach Anspruch 13 oder 14, **dadurch gekennzeichnet, dass** die Breite des zentralen Intensitätsminimums der Abregungs- oder Scholtlichtverteilung (1) durch Einstellen des Abstandes der Teilbeleuchtungslichtbündel (7, 8) in der Eintrittspupille (14) des Beleuchtungsobjektivs (10) eingestellt wird.

## Claims

1. An illumination apparatus for a microscope for producing a de-excitation or switching light distribution (1), the illumination apparatus having a light source (2) which is configured to produce a primary illumination light beam (3), the illumination apparatus comprising:
a. a beam-splitting apparatus (6) which is configured to divide the primary illumination light beam (3) into two partial illumination light beams (7, 8),
b. an illumination objective (10) which is configured to focus the partial illumination light beams (7, 8) onto and/or into a sample, wherein the partial illumination light beams (7, 8) extend, spatially separated from one another, through an entry pupil of the illumination objective (10) and are spatially superposed on and/or in the sample after passing through the illumination objective (10), and
c. at least one phase-influencing means (9) which is configured to cause a relative phase offset of the partial illumination light beams (7, 8) with respect to one another in such a way that the partial illumination light beams (7, 8) in the entry pupil of the illumination objective have a phase offset of π.

2. The illumination apparatus according to claim 1, **characterized in that**
a. the illumination apparatus is configured such that each partial illumination light beam (7, 8) extends through its own one of two crescent-shaped parts of the entry pupil (14), and/or that
b. the illumination apparatus is configured such that each partial illumination light beam (7, 8) extends through a crescent-shaped part of the entry pupil (14), wherein the crescent-shaped part is respectively under-illuminated by the partial illumination light beam (7, 8), and/or that
c. the illumination apparatus is configured such that each partial illumination light beam (7, 8) in the region of the entry pupil (14) has a diameter that is smaller than the radius of the entry pupil (14), and/or that
d. the illumination apparatus is configured such that the partial illumination light beams (7, 8) do not fully illuminate the entry pupil (14).

3. The illumination apparatus according to claim 1 or 2, **characterized in that** at least one adjusting means is provided, with which
a. the position of the partial illumination light beam (7, 8) in the region of the entry pupil (14), and/or
b. the position of at least one of the partial illumination light beams (7, 8) relative to the optical axis of the illumination objective (10), and/or
c. the shape of the partial illumination light beams (7, 8) in the region of the entry pupil (14), and/or
d. the divergence of the partial illumination light beams (7, 8) in the region of the entry pupil (14), and/or
e. the distance between the partial illumination light beams (7, 8) in the region of the entry pupil (14), and/or
f. the diameter of the partial illumination light beams (7, 8) in the region of the entry pupil (14) is adjustable.

4. The illumination apparatus according to claim 3, **characterized in that**
a. the adjusting means, in particular for adjusting the distance (15) and/or the positions of the partial illumination light beams (7, 8), has at least one beam-deflecting element that is adjustable with respect to the deflection angle, and/or that
b. the adjusting means, in particular for adjusting the distance (15) and/or the positions of the partial illumination light beams (7, 8), has at least one tiltably-mounted and/or remote-controlled, motor-movable mirror, and/or that
c. the adjusting means, in particular for adjusting the distance (15) and/or the positions of the partial illumination light beams (7, 8), has at least one tiltably-mounted and/or remote-controlled, motor-movable grating, and/or that
d. the adjusting means, in particular for adjusting the distance (15) and/or the positions of the partial illumination light beams (7, 8), has at least one active optical element, and/or that
e. the adjusting means, in particular for adjusting the distance (15) and/or the positions of the partial illumination light beams (7,8), has at least one active optical element which is designed as an SLM (spatial light modulator) or as a DMD (digital micromirror device), and/or that
f. the adjusting means, in particular for adjusting the distance (15) and/or the positions of the partial illumination light beams (7, 8), has at least one acousto-optical component, and/or that
g. the adjusting means, in particular for adjusting the distance (15) and/or the positions of the partial illumination light beams (7, 8), has at least one acousto-optical component designed as an AOD (acousto-optical deflector), and/or that
h. the adjusting means, in particular for adjusting the distance (15) and/or the positions of the partial illumination light beams (7, 8), has at least one acousto-optical component designed as an AOM (acousto-optical modulator), and/or that
i. the adjusting means, in particular for adjusting the distance (15) and/or the positions of the partial illumination light beams (7, 8), has an AOTF (acousto-optical tunable filter) which is controlled such that, by changing the polarization of the first diffraction order relative to the zeroth diffraction order a following polarization-dependent phase delay by means of a birefringent material is effected, and/or that
j. the adjusting means, in particular for adjusting the distance (15) and/or the positions of the partial illumination light beams (7, 8), has two diaphragms which are adjustable in terms of their distance and/or in terms of their position, in particular, two iris diaphragms adjustable in diameter, and arranged in the entry pupil (14) of the illumination objective (10) or in a plane conjugated to the entry pupil (14), and/or that
k. the adjusting means, in particular for adjusting the diameter of the partial illumination light beams (7, 8) has a beam expander, which is adjustable, in particular, in a remote-controlled manner, with respect to the enlargement, in the beam path of at least one of the partial illumination light beams (7, 8), and/or that
l. the adjusting means, in particular for adjusting the diameter of the partial illumination light beams (7, 8), has at least one lens with variable focal length in the beam path of at least one of the partial illumination light beams (7, 8).

5. The illumination apparatus according to one of the claims 1 to 4, **characterized in that** the diameter and the distance of the partial illumination light beams are adapted to one another such that the interference pattern of the two partial beams consists only of two intensity maxima lying symmetrically about a zero point.

6. The illumination apparatus according to one of the claims 1 to 5, **characterized in that**
a. the de-excitation or switching light distribution (1) of the partial illumination light beams (7, 8) interfering in the region of their spatial superposition has a zero point along the optical axis,
b. the de-excitation or switching light distribution (1) of the partial illumination light beams (7, 8) interfering in the region of their spatial superposition has a zero point along a plane in which the optical axis lies.

7. The illumination apparatus according to one of the claims 1 to 6, **characterized in that**
a. the phase-influencing means (9) and the beam-splitting apparatus (6) are formed by the same optical component, and/or that
b. the phase-influencing means (9) and the beam-splitting apparatus (6) are formed by the same optical component, wherein the optical component causes both the division of the primary illumination light beam (3) into the two partial illumination light beams (7, 8) and the relative phase offset of the partial illumination light beams (7, 8) with respect to one another.

8. The illumination apparatus according to one of the claims 1 to 7, **characterized in that** the beam-splitting apparatus (6) has at least one grating, and/or that the beam-splitting apparatus (6) has at least one phase grating, and/or that the beam-splitting apparatus (6) has a binary grating, and/or that the beam-splitting apparatus (6) has a superposition grating which corresponds to the superposition of two gratings blazed and/or oriented in opposite directions with regard to their phase delay distribution, and/or that the beam-splitting apparatus (6) has a grating adjustable with regard to the grating period.

9. A microscope with an illumination apparatus according to one of the claims 1 to 8.

10. The microscope according to claim 9, **characterized in that** the light source (2) or a further light source (2) produces at least one excitation light beam for illuminating the sample.

11. The microscope according to claim 10, **characterized in that** the excitation light beam is spatially and/or temporally superposed with the de-excitation or switching light distribution (1) in the region of the sample.

12. The microscope according to claim 10 or 11, **characterized in that**
a. the microscope is designed as an SPIM microscope, and/or that
b. the excitation light beam is formed as an excitation light sheet and that the de-excitation or switching light distribution (1) has two de-excitation or switching light sheets, which are respectively parallel to the excitation light sheet and arranged on both sides of the excitation light sheet.

13. A method for imaging, in particular for super-resolution imaging, a sample using a microscope according to one of the claims 11 to 12, **characterized in that** fluorescence excitation of the sample is caused using the excitation light beam, while a stimulated emission, and/or a ground state depletion, and/or a conformity change, and/or a switching of fluorophores is caused with the de-excitation or switching light distribution (1).

14. The method according to claim 13, **characterized in that** the orientation and/or the position of the de-excitation or switching light distribution (1) relative to the sample and/or relative to the optical axis of the illumination objective (10) is adjusted by adjusting the position of the partial illumination light beams (7, 8) relative to one another and/or relative to the entry pupil (14).

15. The method according to claim 13 or 14, **characterized in that** the width of the central intensity minimum of the de-excitation or switching light distribution (1) is adjusted by adjusting the distance of the partial illumination light beams (7, 8) in the entry pupil (14) of the illumination objective (10).

## Revendications

1. Dispositif d'éclairage pour un microscope permettant de générer une répartition de la lumière de désexcitation ou de commutation (1), le dispositif d'éclairage présentant une source lumineuse (2) qui est réalisée pour générer un faisceau de lumière d'éclairage primaire (3), de dispositif d'éclairage comprenant :
a) un dispositif de séparation de faisceau (6) qui est réalisé pour séparer le faisceau de lumière d'éclairage primaire (3) en deux faisceaux de lumière d'éclairage partiels (7, 8),
b) un objectif d'éclairage (10) qui est réalisé pour focaliser les faisceaux de lumière d'éclairage partiels (7, 8) sur et/ou dans un échantillon, les faisceaux de lumière d'éclairage partiels (7, 8) passant de manière séparée l'un de l'autre dans l'espace à travers une pupille d'entrée de l'objectif d'éclairage (10), et se superposant dans l'espace sur et/ou dans l'échantillon après le passage à travers l'objectif d'éclairage (10), et
c) au moins un moyen pour influencer les phases (9) qui est réalisé pour provoquer un déphasage relatif des faisceaux de lumière d'éclairage partiels (7, 8) l'un par rapport à l'autre de telle sorte que les faisceaux de lumière d'éclairage partiels (7, 8) présentent un déphasage de π dans la pupille d'entrée de l'objectif d'éclairage.

2. Dispositif d'éclairage selon la revendication 1, **caractérisé en ce que**
a) le dispositif d'éclairage est réalisé de telle sorte que chaque faisceau de lumière d'éclairage partiel (7, 8) passe à travers respectivement une partie propre de deux parties en forme de demi-lune de la pupille d'entrée (14), et/ou **en ce que**
b) le dispositif d'éclairage est réalisé de telle sorte que chaque faisceau de lumière d'éclairage partiel (7, 8) passe à travers respectivement une partie en forme de demi-lune de la pupille d'entrée (14), la partie en forme de demi-lune étant respectivement rétroéclairée par le faisceau de lumière d'éclairage partiel (7, 8), et/ou **en ce que**
c) le dispositif d'éclairage est réalisé de telle sorte que chaque faisceau de lumière d'éclairage partiel (7, 8) présente au niveau de la pupille d'entrée (14) un diamètre qui est inférieur au rayon de la pupille d'entrée (14), et/ou **en ce que**
d) le dispositif d'éclairage est réalisé de telle sorte que les faisceaux de lumière d'éclairage partiels (7, 8) n'éclairent pas complètement la pupille d'entrée (14) .

3. Dispositif d'éclairage selon la revendication 1 ou 2, **caractérisé en ce qu'**au moins un moyen de réglage est présent qui permet de régler
a) la position des faisceaux de lumière d'éclairage partiels (7, 8) au niveau de la pupille d'entrée (14), et/ou
b) la position d'au moins l'un des faisceaux de lumière d'éclairage partiels (7, 8) par rapport à l'axe optique de l'objectif d'éclairage (10), et/ou
c) la forme des faisceaux de lumière d'éclairage partiels (7, 8) au niveau de la pupille d'entrée (14), et/ou
d) la divergence des faisceaux de lumière d'éclairage partiels (7, 8) au niveau de la pupille d'entrée (14), et/ou
e) l'espacement des faisceaux de lumière d'éclairage partiels (7, 8) au niveau de la pupille d'entrée (14), et/ou
f) le diamètre des faisceaux de lumière d'éclairage partiels (7, 8) au niveau de la pupille d'entrée (14).

4. Dispositif d'éclairage selon la revendication 3, **caractérisé en ce que**
a) le moyen de réglage, en particulier pour régler l'espacement (15) et/ou les positions des faisceaux de lumière d'éclairage partiels (7, 8), présente au moins un élément de déflexion de faisceau réglable en termes d'angle de déflexion, et/ou **en ce que**
b) le moyen de réglage, en particulier pour régler l'espacement (15) et/ou les positions des faisceaux de lumière d'éclairage partiels (7, 8), présente au moins un miroir monté basculant et/ou pouvant être déplacé de manière télécommandée par moteur, et/ou **en ce que**
c) le moyen de réglage, en particulier pour régler l'espacement (15) et/ou les positions des faisceaux de lumière d'éclairage partiels (7, 8), présente au moins un réseau monté basculant et/ou pouvant être déplacé de manière télécommandée par moteur, et/ou **en ce que**
d) le moyen de réglage, en particulier pour régler l'espacement (15) et/ou les positions des faisceaux de lumière d'éclairage partiels (7, 8), présente au moins un élément optique actif, et/ou **en ce que**
e) le moyen de réglage, en particulier pour régler l'espacement (15) et/ou les positions des faisceaux de lumière d'éclairage partiels (7, 8), présente au moins un élément optique actif qui est réalisé sous forme de SLM (modulateur spatial de lumière) ou de DMD (matrice de micro-miroirs), et/ou **en ce que**
f) le moyen de réglage, en particulier pour régler l'espacement (15) et/ou les positions des faisceaux de lumière d'éclairage partiels (7, 8), présente au moins un composant acousto-optique, et/ou **en ce que**
g) le moyen de réglage, en particulier pour régler l'espacement (15) et/ou les positions des faisceaux de lumière d'éclairage partiels (7, 8), présente au moins un composant acousto-optique qui est réalisé sous forme d'AOD (déflecteur acousto-optique), et/ou **en ce que**
h) le moyen de réglage, en particulier pour régler l'espacement (15) et/ou les positions des faisceaux de lumière d'éclairage partiels (7, 8), présente au moins un composant acousto-optique qui est réalisé sous forme d'AOM (modulateur acousto-optique), et/ou **en ce que**
i) le moyen de réglage, en particulier pour régler l'espacement (15) et/ou les positions des faisceaux de lumière d'éclairage partiels (7, 8), présente un AOTF (filtre accordable acousto-optique) qui est commandé de telle sorte qu'une variation de polarisation du premier ordre de diffraction par rapport à l'ordre de diffraction zéro provoque un retard de phase consécutif dépendant de la polarisation au moyen d'un matériau biréfringent, et/ou **en ce que**
j) le moyen de réglage, en particulier pour régler l'espacement (15) et/ou les positions des faisceaux de lumière d'éclairage partiels (7, 8), présente deux diaphragmes réglables en termes d'espacement et/ou en termes de position, en particulier des diaphragmes iris réglables en diamètre, qui sont disposés dans la pupille d'entrée (14) de l'objectif d'éclairage (10) ou dans un plan conjugué par rapport à la pupille d'entrée (14), et/ou **en ce que**
k) le moyen de réglage, en particulier pour régler le diamètre des faisceaux de lumière d'éclairage partiels (7, 8), présente un dispositif d'expansion de faisceau réglable, en particulier de manière télécommandée, en termes d'agrandissement, sur la trajectoire du faisceau d'au moins l'un des faisceaux de lumière d'éclairage partiels (7, 8), et/ou **en ce que**
l) le moyen de réglage, en particulier pour régler le diamètre des faisceaux de lumière d'éclairage partiels (7, 8), présente au moins une lentille à distance focale variable sur la trajectoire du faisceau d'au moins l'un des faisceaux de lumière d'éclairage partiels (7, 8).

5. Dispositif d'éclairage selon l'une quelconque des revendications 1 à 4, **caractérisé en ce que** le diamètre et l'espacement des faisceaux de lumière d'éclairage partiels sont accordés l'un par rapport à l'autre de telle sorte que le motif d'interférence des deux faisceaux partiels n'est composé que de deux maxima d'intensité situés de manière symétrique autour d'un point zéro.

6. Dispositif d'éclairage selon l'une quelconque des revendications 1 à 5, **caractérisé en ce que**
a) la répartition de la lumière de désexcitation ou de commutation (1) des faisceaux de lumière d'éclairage partiels (7, 8) interférant au niveau de leur superposition dans l'espace présente un point zéro le long de l'axe optique,
b) la répartition de la lumière de désexcitation ou de commutation (1) des faisceaux de lumière d'éclairage partiels (7, 8) interférant au niveau de leur superposition dans l'espace présente un point zéro le long d'un plan dans lequel se trouve l'axe optique.

7. Dispositif d'éclairage selon l'une quelconque des revendications 1 à 6, **caractérisé en ce que**
a) le moyen pour influencer les phases (9) et le dispositif de séparation de faisceau (6) est formé par le même composant optique, et/ou **en ce que**
b) le moyen pour influencer les phases (9) et le dispositif de séparation de faisceau (6) est formé par le même composant optique, le composant optique provoquant à la fois la séparation du faisceau de lumière d'éclairage primaire (3) en deux faisceaux de lumière d'éclairage partiels (7, 8) et le déphasage relatif des faisceaux de lumière d'éclairage partiels (7. 8) l'un par rapport à l'autre.

8. Dispositif d'éclairage selon l'une quelconque des revendications 1 à 7, **caractérisé en ce que** le dispositif de séparation de faisceau (6) présente au moins un réseau, et/ou **en ce que** le dispositif de séparation de faisceau (6) présente au moins un réseau de phase, et/ou **en ce que** le dispositif de séparation de faisceau (6) présente un réseau binaire, et/ou **en ce que** le dispositif de séparation de faisceau (6) présente un réseau de superposition qui correspond à la superposition de deux réseaux orientés à contresens en termes de répartition de retard de phase et/ou de type échelette, et/ou **en ce que** le dispositif de séparation de faisceau (6) présente un réseau réglable en termes de période de réseau.

9. Microscope comprenant un dispositif d'éclairage selon l'une quelconque des revendications 1 à 8.

10. Microscope selon la revendication 9, **caractérisé en ce que** la source lumineuse (2) ou une autre source lumineuse (2) génère au moins un faisceau de lumière d'excitation pour éclairer l'échantillon.

11. Microscope selon la revendication 10, **caractérisé en ce que** le faisceau de lumière d'excitation est superposé au niveau de l'échantillon à la répartition de la lumière de désexcitation ou de commutation (1) dans l'espace et/ou dans le temps.

12. Microscope selon la revendication 10 ou 11, **caractérisé en ce que**
a) le microscope est réalisé sous forme de microscope SPIM, et/ou **en ce que**
b) le faisceau de lumière d'excitation est réalisé sous forme de lame de lumière d'excitation, et **en ce que** la répartition de la lumière de désexcitation ou de commutation (1) présente deux lames de lumière de lumière de désexcitation ou de commutation, respectivement parallèles à la lame de lumière d'excitation, qui sont disposées des deux côtés de la lame de lumière d'excitation.

13. Procédé de représentation, en particulier pour une représentation surrésolue, d'un échantillon en utilisant un microscope selon l'une quelconque des revendications 11 à 12, **caractérisé en ce que** le faisceau de lumière d'excitation provoque une excitation de fluorescence de l'échantillon alors que la répartition de la lumière de désexcitation ou de commutation (1) provoque une émission stimulée et/ou un appauvrissement de l'état fondamental et/ou une modification de conformité et/ou une commutation de fluorophores.

14. Procédé selon la revendication 13, **caractérisé en ce que** l'orientation et/ou la position de la répartition de la lumière de désexcitation ou de commutation (1) par rapport à l'échantillon et/ou par rapport à l'axe optique de l'objectif d'éclairage (10) sont réglées par le réglage de la position des faisceaux de lumière d'éclairage partiels (7, 8) l'un par rapport à l'autre et/ou par rapport à la pupille d'entrée (14).

15. Procédé selon la revendication 13 ou 14, **caractérisé en ce que** la largeur du minimum d'intensité central de la répartition de la lumière de désexcitation ou de commutation (1) est réglée par le réglage de l'espacement des faisceaux de lumière d'éclairage partiels (7, 8) dans la pupille d'entrée (14) de l'objectif d'éclairage (10).
